# EUROPEAN PATENT SPECIFICATION

(11) **EP 1 672 639 B1**
(45) Date of publication and mention of the grant of the patent: **06.05.2009**
(21) Application number: 04772854.8
(22) Date of filing: 31.08.2004
(51) Int. Cl.: G11B 27/031, G11B 15/087, G11B 20/10, G11B 27/19, H04N 5/91

(54) **INFORMATION RECORDING/REPRODUCING DEVICE**
INFORMATIONSAUFZEICHNUNGS-/WIEDERGABEEINRICHTUNG
DISPOSITIF D'ENREGISTREMENT/LECTURE D'INFORMATIONS

(30) Priority: 09.09.2003 JP 2003316351
(43) Date of publication of application: 21.06.2006
(73) Proprietor: Panasonic Corporation, Kadoma-shi Osaka 571-8501 (JP)
(72) Inventor: KINAKA, Minoru Matsushita Electric Ind.Co.Ltd., Chuo-Ku Osaka-shi Osaka 540-6319 (JP)
(74) Representative: Jeffrey, Philip Michael
(86) International application number: PCT/JP2004/012905
(87) International publication number: WO 2005/027132

(56) References cited:
- EP-A- 0 526 925
- JP-A- 8 017 137
- JP-A- 8 031 076
- JP-A- 11 126 430
- JP-A- 60 028 053
- JP-A- 2000 076 736
- JP-A- 2001 028 182
- JP-A- 2001 045 421
- US-A- 5 668 789
- US-A- 5 673 154

## Description

### BACKGROUND OF THE INVENTION

### 1. Field of the Invention

The present invention relates to an information recording and reproducing apparatus having an analog reproducing function of reproducing analog video and audio information recorded on an analog recording medium such as a magnetic tape medium and a function of recording digital video and audio information onto a digital recording medium such as a digital versatile disk (DVD). In particular, the present invention relates to an information recording and reproducing apparatus configured so as to record reproduced information onto a digital recording medium (perform so-called dubbing processing), while reproducing video and audio information from an analog recording medium.

### 2. Description of the Related Art

Conventionally, in order to record video and audio information such as a movie, magnetic tapes (video tapes) for recording video and audio information in an analog fashion, DVDs for recording video and audio information in a digital fashion, and the like are used. Digital recording media such as a DVD are spreading widely along with the recent development of a compression encoding technique. Examples of an apparatus for recording and reproducing information by driving a magnetic tape include a video cassette player (VCP), and the like. Examples of an apparatus for recording and reproducing information by driving an optical disk include a DVD recorder, and the like.

Recently, a composite apparatus in which the above-mentioned VCP and DVD recorder are integrated has been proposed. Such a composite apparatus is capable of dubbing information recorded on a magnetic tape onto a DVD. Furthermore, market needs for transferring video recording information recorded on a video tape to a DVD so as to utilize a storage space effectively also have increased.

As the above-mentioned type of a conventional composite apparatus, for example, a video and audio recording and reproducing apparatus is known, which is described in, for example, JP3092141U (Patent Document 1), JP2000-76736A (Patent Document 2), JP61(1986)-230693A (Patent Document 3), and JP61(1986)-230694A (Patent Document 4).

In the conventional video and audio recording and reproducing apparatus disclosed in Patent Document 1, whether or not a free space is available in a DVD is confirmed before the contents of a magnetic tape are dubbed onto the DVD. In the case where no free space is available, a warning is given to output a message saying that a free space should be obtained. After a free space is obtained, the magnetic tape is rewound and information is reproduced from the magnetic tape at a high speed, whereby tape information including information on the position where a recording mode is switched, a non-signal region, the kind of the magnetic tape, and the presence/absence of a copy guard mark is detected and stored in a memory. Thereafter, the magnetic tape is rewound again, and the bit rate during dubbing is adjusted in accordance with the tape information stored in the memory so that the video and audio information recorded on the magnetic tape is accommodated in one DVD as much as possible, whereby the video and audio information in a region excluding the non-recorded region of the magnetic tape is dubbed onto the DVD.

However, in the above-mentioned conventional video and audio recording and reproducing apparatus, for example, when all the information recorded on one video tape is desired to be dubbed onto the DVD, the video tape is rewound to the leading edge, information is reproduced from the video tape at a high speed to the trailing edge, and after the video tape is rewound to the leading edge again, a dubbing operation is started. Thus, a period from a time when an operator provides a dubbing instruction to a time when dubbing actually is started is long, which is inconvenient for use.

Furthermore, in the above-mentioned conventional video and audio recording and reproducing apparatus, tape information is not obtained until after the free space of the DVD is obtained, and it is not checked whether or not the video and audio information, which is desired to be dubbed in the free space of the DVD, is accommodated in the free space of the DVD. Therefore, for example, when the contents of one video tape are dubbed onto one DVD, the free space of the DVD may be used up before dubbing is completed.

### SUMMARY OF THE INVENTION

Therefore, with the foregoing in mind, it is an object of the present invention to provide an information recording and reproducing apparatus capable of dubbing analog video and audio information onto a digital recording medium such as a DVD in a shortest possible time, by using a control signal recorded on an analog recording medium such as a video tape together with the analog video and audio information.

According to the present invention, the term "dubbing" refers to the processing of variously editing a reproduced signal from a first recording medium and recording the signal onto a second recording medium, as well as the processing of reproducing video and audio information from a first recording medium storing it and copying the reproduced signal to a second recording medium as it is. The above-mentioned editing includes variously processing the reproduced signal from the first recording medium, adding other information, cutting an unnecessary portion from the reproduced signal of the first recording medium, and the like.

In order to achieve the above-mentioned object, an information recording and reproducing apparatus of the present invention having a reproducing part for reproducing a video and audio signal from an analog recording medium, and a recording part for recording the video and audio signal onto a digital recording medium, includes: a control signal detecting part for detecting a control signal recorded on the analog recording medium together with the video and audio signal; and a control part for controlling operations of the reproducing part, the recording part, and the control signal detecting part. When a dubbing instruction is input, the control part instructs the recording part to start a dubbing operation of recording the video and audio signal reproduced by the reproducing part onto the digital recording medium, and during the dubbing operation, when the control signal detecting part detects a non-recorded region where the control signal is not recorded on the analog recording medium, the control part instructs the recording part to temporarily stop recording onto the digital recording medium.

The control signal refers to a signal recorded on an analog recording medium together with a video and audio signal. More specifically, at a portion where the video and audio signal is not recorded on the analog recording medium, a control signal is not recorded, either. For example, in the case of a magnetic tape medium, the control signal can be detected by a control head during reproduction, or fast-forwarding or rewinding.

In the above-mentioned configuration, after commencement of a dubbing operation, in the case where the control signal detecting part detects a non-recorded region where a control signal is not recorded on the analog recording medium, the control part instructs the recording part to temporarily stop recording onto the digital recording medium. Because of this, only a video and audio signal recorded on the analog recording medium can be recorded onto the digital recording medium. Furthermore, unlike the conventional example, it is not necessary to perform high-speed reproduction from the leading edge to the trailing edge of the analog recording medium before commencement of dubbing processing, in order to obtain tape information containing information on a non-signal region. Therefore, dubbing from the analog recording medium to the digital recording medium can be completed in a shorter period of time.

These and other advantages of the present invention will become apparent to those skilled in the art upon reading and understanding the following detailed description with reference to the accompanying figures.

### BRIEF DESCRIPTION OF THE DRAWINGS

FIG. 1 is a block diagram showing a configuration of a dubbing apparatus in an embodiment of the present invention.
FIG. 2 is a schematic view showing the state of data dubbed from a video tape onto a DVD in the embodiment of the present invention.
FIGS. 3A to 3D are flow charts each showing a dubbing operation from a video tape to a DVD in the embodiment of the present invention.
FIG. 4 is a flow chart showing an operation of determination processing of a bit rate in the embodiment of the present invention.

### DESCRIPTION OF THE PREFERRED EMBODIMENTS

An information recording and reproducing apparatus of the present invention having a reproducing part for reproducing a video and audio signal from an analog recording medium, and a recording part for recording the video and audio signal onto a digital recording medium, includes: a control signal detecting part for detecting a control signal recorded on the analog recording medium together with the video and audio signal; and a control part for controlling operations of the reproducing part, the recording part, and the control signal detecting part. When a dubbing instruction is input, the control part instructs the recording part to start a dubbing operation of recording the video and audio signal reproduced by the reproducing part onto the digital recording medium, and during the dubbing operation, when the control signal detecting part detects a non-recorded region where the control signal is not recorded on the analog recording medium, the control part instructs the recording part to temporarily stop recording onto the digital recording medium.

In the information recording and reproducing apparatus according to the above-mentioned configuration, it is preferable that, during the dubbing operation, when the control signal detecting part detects the control signal again on the analog recording medium after the recording part temporarily stops recording onto the digital recording medium, the control part instructs the recording part to resume recording onto the digital recording medium.

According to the above-mentioned configuration, the non-recorded region on the analog recording medium can be deleted, and only the video and audio signal can be recorded onto the digital recording medium.

It is preferable that the information recording and reproducing apparatus according to the above-mentioned configuration further includes a free space obtaining part for obtaining a free space of the digital recording medium, wherein, when a dubbing instruction is input, the control part calculates a recording time of a video and audio signal of the analog recording medium, based on a control signal detected by the control signal detecting part from the analog recording medium, determines a bit rate during recording of the video and audio signal by the recording part so that all the video and audio signal corresponding to the calculated time is recorded in the free space of the digital recording medium obtained by the free space obtaining part, and starts the dubbing operation in accordance with the bit rate.

According to the above-mentioned configuration, all the video and audio signal recorded on the analog recording medium can be recorded in the free space of the digital recording medium.

It is preferable that the information recording and reproducing apparatus according to the above-mentioned configuration, using a tape-shaped medium as the analog recording medium, includes a control head for reading a control signal from the tape-shaped medium, wherein, when a dubbing instruction is input, the control part first-forwards the tape-shaped medium to a trailing edge, and thereafter, while the tape-shaped medium is rewound to a leading edge, the control head obtains a control signal recorded on the tape-shaped medium.

Conventionally, it takes time to determine a bit rate during dubbing, since it is necessary to perform high-speed reproduction before commencement of dubbing. However, according to the above-mentioned configuration, a control signal can be obtained by the control head while the tape-shaped medium is rewound from the trailing edge to the leading edge. This makes it unnecessary to perform high-speed reproduction before commencement of dubbing as in the conventional example, so that the dubbing processing from the analog recording medium to the digital recording medium can be completed in a short period of time.

It is preferable that the information recording and reproducing apparatus according to the above-mentioned configuration further includes a storage part for storing a recording time of a video and audio signal recorded on the analog recording medium, calculated based on the control signal, wherein the control part instructs the reproducing part and the recording part to complete the dubbing operation, when the trailing edge of the analog recording medium is detected during the dubbing operation, and after completion of the dubbing operation, when a dubbing instruction is input again without taking the analog recording medium out of the information recording and reproducing apparatus, the control part rewinds the tape-shaped medium to the leading edge, determines a bit rate during recording of the video and audio signal by the recording part, using the recording time stored in the storage part, and starts the dubbing operation in accordance with the bit rate.

According to the above-mentioned configuration, in the case where dubbing processing is performed continuously from one analog recording medium to a plurality of digital recording media, a bit rate is determined using a recording time stored in the storage part during the second and subsequent dubbing processings. This makes it unnecessary to perform fast-forwarding and rewinding for obtaining a control signal, and the second and subsequent dubbing processings can be completed in a shorter period of time.

It is preferable that the information recording and reproducing apparatus according to the above-mentioned configuration further includes a user interface, wherein, in a case where a recordable time when information is recorded at a lowest bit rate in the free space of the digital recording medium is shorter than a recording time of the video and audio signal recorded on the analog recording medium, the control part performs at least one of a warning display to the user interface and a suspension of the dubbing operation.

According to the above-mentioned configuration, when the recordable time when information is recorded at a lowest bit rate in the free space of the digital recording medium is shorter than the recording time of the video and audio signal recorded on the analog recording medium, dubbing can be prevented from being performed erroneously, whereby the reliability of dubbing can be enhanced.

Hereinafter, the present invention will be described specifically by way of illustrative embodiments with reference to the drawings.

### Embodiment 1

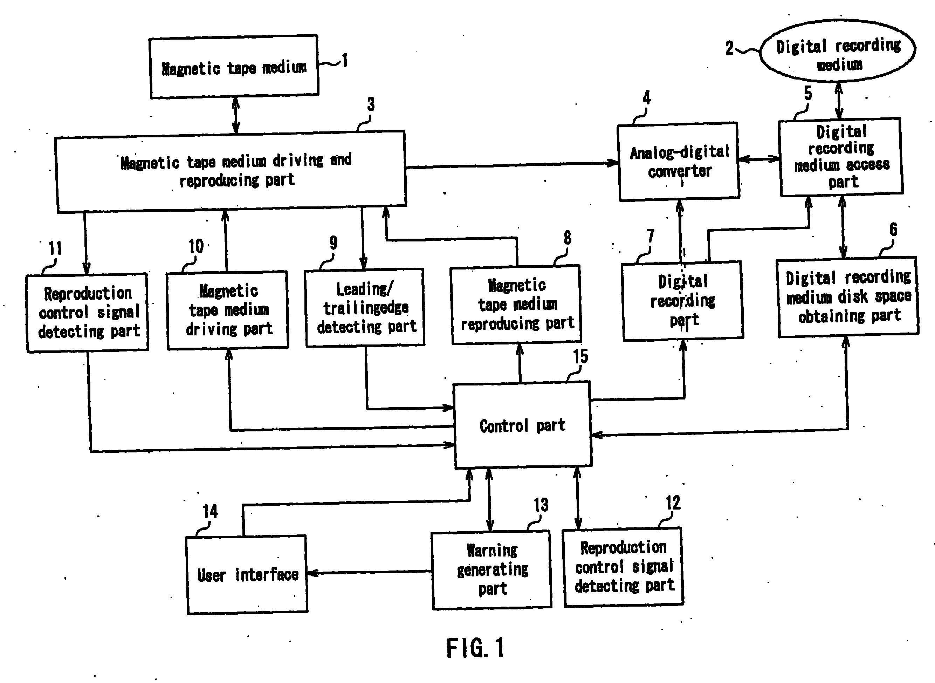

FIG. 1 is a block diagram showing a configuration of a dubbing apparatus (video and audio recording and reproducing apparatus) according to Embodiment 1 of the present invention.

In FIG. 1, reference numeral 1 denotes a magnetic tape medium that is a first recording medium with respect to which analog video and audio information can be recorded and reproduced. This magnetic tape medium corresponds to a so-called video tape.

Reference numeral 3 denotes a magnetic tape medium driving and reproducing part for reproducing analog video and audio information recorded on the magnetic tape medium 1, and fast-forwarding and rewinding the magnetic tape medium 1. The magnetic tape medium driving and reproducing part 3 includes a capstan and a roller for controlling the travel of the magnetic tape medium 1, a rotation drum provided with a head for recording and reproducing a video and audio signal, a control head for recording a control signal onto the magnetic tape medium 1 and reproducing the recorded control signal, a signal processing circuit for performing various signal processings of a reproduced video and audio signal (none of these elements are shown).

Reference numeral 2 denotes a digital recording medium that is a second recording medium with respect to which digital video and audio information can be recorded and reproduced. The present embodiment will be described with the second recording medium being a disk-shaped recording medium, which is detachably provided on an apparatus and on which a signal is recorded digitally, such as a DVD. However, the second recording medium may be a recording medium that is fixed to an apparatus, such as a hard disk.

Reference numeral 5 denotes a digital recording medium access part for recording and reading a signal with respect to the digital recording medium 2. The digital recording medium access part 5 includes a spindle motor for rotating the digital recording medium 2, a laser diode and an optical pick-up for recording and reproducing a signal, and the like (none of these elements are shown).

Reference 4 denotes an analog-digital converter for converting analog video and audio information reproduced by the magnetic tape medium driving and reproducing part 3 into digital video and audio information, and outputting the converted information to the digital recording medium access part 5.

Reference numeral 14 denotes a user interface. The user interface 14 includes an input/output device such as a remote controller, a body key, a display, and the like, and a user input/output interface implemented by a graphical user interface (GUI) on a display. The input interface includes any means through which a user can perform inputs or operations, in addition to the above-mentioned emote controller, body key, and GUI screen. Furthermore, the output interface also includes any means through which notification or display to a user is performed, in addition to the above-mentioned display and GUI screen.

Reference numeral 12 denotes a storage part for storing information.

Reference 11 denotes a reproduction control signal detecting part for detecting reproduction control signals recorded on the magnetic tape medium 1 from a signal reproduced by the magnetic tape medium driving and reproducing part 3.

Reference numeral 10 denotes a magnetic tape medium driving part for instructing the magnetic tape medium driving and reproducing part 3 to fast-forward and rewind the magnetic tape medium 1. More specifically, in the case where the magnetic tape medium driving and reproducing part 3 is a VTR, the magnetic tape medium driving part 10 drives a capstan and a reel.

Reference numeral 9 denotes a leading/trailing edge detecting part for detecting the positions of a leading edge and a trailing edge of the magnetic tape medium 1 from the signal reproduced by the magnetic tape medium driving and reproducing part 3.

Reference numeral 8 denotes a magnetic tape medium reproducing part for instructing the magnetic tape medium driving and reproducing part 3 to reproduce information from the magnetic tape medium 1.

Reference numeral 7 denotes a digital recording part for controlling the analog-digital converter 4 and the digital recording medium access part 5 to record the video and audio information converted to the digital information by the analog-digital converter 4 onto the digital recording medium 2. The digital recording part 7 adjusts the bit rate at which the analog-digital converter 4 converts the analog video and audio information from the magnetic tape medium driving and reproducing part 3 into digital video and audio information, in accordance with the instruction from the control part 15.

Reference numeral 6 denotes a digital recording medium free space obtaining part for instructing the digital recording medium access part 5 to read a free space of the digital recording medium 2.

Reference numeral 13 denotes a warning generating part for allowing the user interface 14 to give a warning in the case where a recordable time when information is recorded in a free space of the digital recording medium 2 at a lowest bit rate is shorter than a recording time of the magnetic tape medium 1. The warning generating part 13, for example, allows the user interface 14 to display a warning to a user saying that dubbing should be stopped in the above-mentioned case.

Reference numeral 15 denotes a control part for controlling the operation of the entire dubbing apparatus of the present embodiment. For example, upon receiving an instruction for performing dubbing through the user interface 14, the control part 15 controls the magnetic tape medium driving part 10, the leading/trailing edge detecting part 9, a reproduction control signal detecting part 11, the storage part 12, the digital recording medium free space obtaining part 6, the digital recording part 7, the magnetic tape medium reproducing part 8, and the warning generating part 13, thereby performing a dubbing operation.

The dubbing apparatus of the present embodiment configured as described above can dub, for example, all the recorded parts of analog video and audio information recorded on one magnetic tape medium such as a video tape onto one digital recording medium such as a DVD in a shorter period of time with a user's simple operation.

Furthermore, the dubbing apparatus of the present embodiment is configured so as not to perform dubbing erroneously, in the case where the recordable time when information is recorded in a free space of a digital recording medium such as a DVD at a lowest bit rate is shorter than a time of video and audio information recorded on a magnetic tape medium such as a VHS.

Furthermore, the dubbing apparatus of the present embodiment can complete dubbing in a shorter period of time, when analog video and audio recording information recorded on a magnetic tape medium such as a video tape is dubbed continuously onto a plurality of digital recording media such as DVDs.

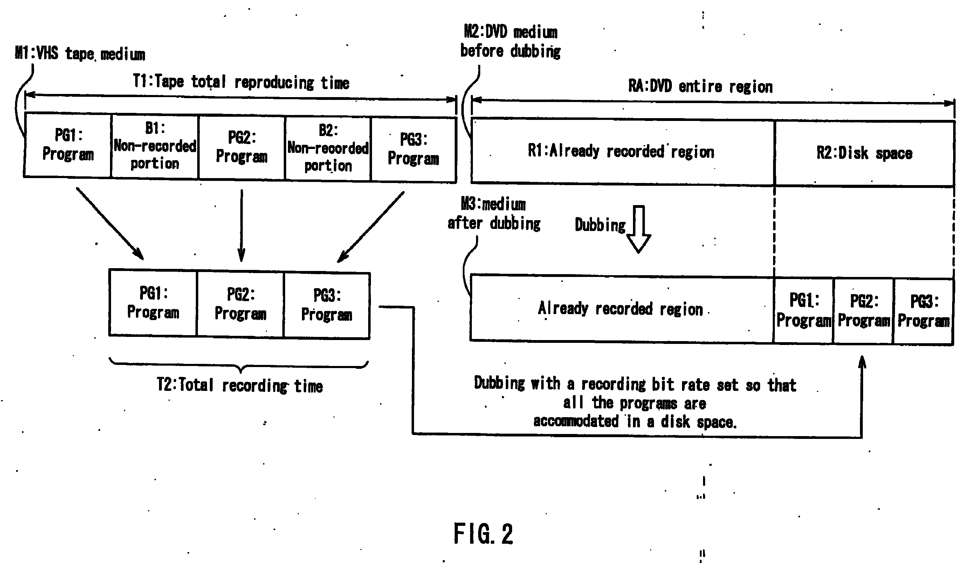

Hereinafter, the dubbing operation from a video tape to a DVD in the dubbing apparatus according to the present embodiment configured as described above will be described with reference to FIGS. 1 and 2.

In FIG. 2, M1 is a video tape medium to be a dubbing origin. T1 denotes a tape total reproducing time, which is a time required for reproducing information from the video tape medium M1 from the leading edge to the trailing edge. PG1 denotes the first program recorded on the video tape medium M1. PG2 denotes the second program recorded on the video tape medium M1. PG3 denotes the third program recorded on the video tape medium M1. B1 denotes a non-recorded portion between the program PG1 and the program PG2. B2 denotes a non-recorded portion between the program PG2 and the program PG3. More specifically, the video tape medium M1 includes portions where the programs PG1, PG2, and PG3 are recorded, and the non-recorded portions B1 and B2. T2 shown in FIG. 2 denotes a time (total recording time) required for continuously reproducing the programs TG1, TG2, and TG3. M2 shows a state before dubbing of a DVD medium. RA denotes an entire storage region (DVD entire region) of the DVD medium M2. R1 denotes an already recorded region where video and audio information has already been recorded in the DVD medium before dubbing M2. R2 denotes a free space where information is not recorded in the DVD medium before dubbing M2. M3 denotes a DVD medium after dubbing with the bit rate adjusted so that the programs PG1, PG2, and PG3 are accommodated in the free space R2.

When an instruction for performing dubbing is input from a user through the user interface 14, the control part 15 fast-forwards the magnetic tape medium 1 to the trailing edge by using the magnetic tape medium driving part 10 and the leading/trailing edge detecting part 9, and thereafter, obtains the number of reproduction control signals recorded on the magnetic tape medium 1 by using the reproduction control signal detecting part 11 while rewinding the magnetic tape medium 1 to the leading edge. The control part 15 calculates the total recording time T2 based on the number of the obtained reproduction control signals, and records the calculation results in the storage part 12.

The reproduction control signal refers to a signal to be recorded onto the magnetic tape medium 1 simultaneously when analog video and audio information is recorded thereon. In the portions where the analog video and audio information is not recorded (e.g., the non-recorded portions B1 and B2 shown in FIG. 2), no reproduction control signals are present. For example, in the case where analog video and audio information of NTSC is recorded onto a magnetic tape medium of VHS, rectangular signals of 30 pulses per second are recorded as reproduction control signals, together with the analog video and audio information. The reproduction control signals can be read by the control head when the magnetic tape medium 1 is being played back, or fast-forwarded or rewound. As described above, the reproduction control signals are recorded at an equal interval in portions where analog video and audio information is recorded. Therefore, assuming that the interval of the reproduction control signals is *t*, and the number of the reproduction control signals read while the magnetic tape medium 1 is rewound from the trailing edge to the leading edge is *n*, the total recording time T2 of analog video and audio information recorded on the magnetic tape medium 1 is obtained approximately by *t* × (*n*-1).

The control part 15 uses the digital recording medium free space obtaining part 6 to obtain the free space R2 of the digital recording medium 2, and determines the bit rate during recording with respect to the digital recording medium 2 so that the video and audio information corresponding to the total recording time T2 stored in the storage part 12 is accommodated in the free space R2. The control part 15 instructs the digital recording part 7 and the magnetic tape medium reproducing part 8 to perform recording with respect to the digital recording medium 2 and reproduction with respect to the magnetic tape medium 1 simultaneously at the determined bit rate, whereby dubbing is started. More specifically, while the analog video and audio information is reproduced from the magnetic tape medium 1 by the magnetic tape medium reproducing part 8, the reproduced analog video and audio information is converted to digital video and audio information at the bit rate determined as described above, using the analog-digital converter 4, in accordance with the instruction of the digital recording part 7, and recorded onto the digital recording medium 2 using the digital recording medium access part 5.

During dubbing, when the reproduction control signal detecting part 11 detects that there is no reproduction control signal in the information that is being reproduced from the magnetic tape medium 1, the control part 15 instructs the digital recording part 7 to temporarily stop recording with respect to the digital recording medium 2. Thereafter, when the reproduction control signal is detected again, the control part 15 instructs the digital recording part 7 to resume recording with respect to the digital recording medium 2. Because of this, for example, after the program PG1 is recorded onto the digital recording medium 2, the recording with respect to the digital recording medium 2 is temporarily stopped during reproduction of information from the non-recorded portion B1, and when the reproduction of the program PG2 is started, the recording with respect to the digital recording medium 2 is resumed.

According to the above-mentioned processing, in the DVD medium after dubbing M3, dubbing is performed with the bit rate adjusted so that the programs PG1, PG2, and PG3 are accommodated in the free space R2, and the non-recorded portions B1 and B2 between the programs are cut.

Furthermore, the control part 15 is capable of allowing the user interface 14 to give a warning so as to stop dubbing, in the case where the recordable time when information is recorded in the free space R2 of the digital recording medium 2 at a lowest bit rate is shorter than the total recording time T2 of the magnetic tape medium 1. This function can prevent dubbing from being performed erroneously, in the case where the digital recording medium 2 does not have a free space sufficient for recording all the video and audio information of the magnetic tape medium 1 even if information is recorded at a lowest bit rate.

Furthermore, the control part 15 instructs the magnetic tape medium reproducing part 8 and the digital recording part 7 to complete dubbing, when the leading/trailing edge detecting part 11 detects a trailing edge during dubbing.

The user sometimes may desire to dub the analog video and audio information recorded on one magnetic tape medium 1 onto a plurality of digital recording media 2. In such a case, when one dubbing is completed, the user generally replaces only the digital recording medium 2 with a new medium without taking out the magnetic tape medium 1, and inputs an instruction for performing dubbing through the user interface 14. In this case, the control part 15 uses the magnetic tape medium driving part 10 and the leading/trailing edge detecting part 9 to rewind the magnetic tape medium 1 to the leading edge. When the rewinding is completed, the control part 15 uses the digital recording medium free space obtaining part 6 to obtain the free space R2 of the newly mounted digital recording medium 2. Then, the control part 15 uses the free space R2 thus obtained and the total recording time T2 stored in the recording part 12 during the first dubbing to determine the bit rate during recording with respect to the digital recording medium 2, and starts dubbing in accordance with the determined bit rate. More specifically, in the case where dubbing is performed from the identical magnetic tape medium 1 to a plurality of digital recording media 2, the fast-forwarding and rewinding for obtaining the total recording time T2 of the magnetic tape medium 1 are omitted during the second and subsequent dubbing, and the value stored in the recording part 12 during the first dubbing is used as the total recording time T2. Thus, in the case where dubbing is performed from the identical magnetic tape medium 1 to a plurality of digital recording media 2 continuously, the fast-forwarding and rewinding for obtaining the total recording time T2 are omitted during the second and subsequent dubbing, whereby dubbing can be completed in a shorter period of time.

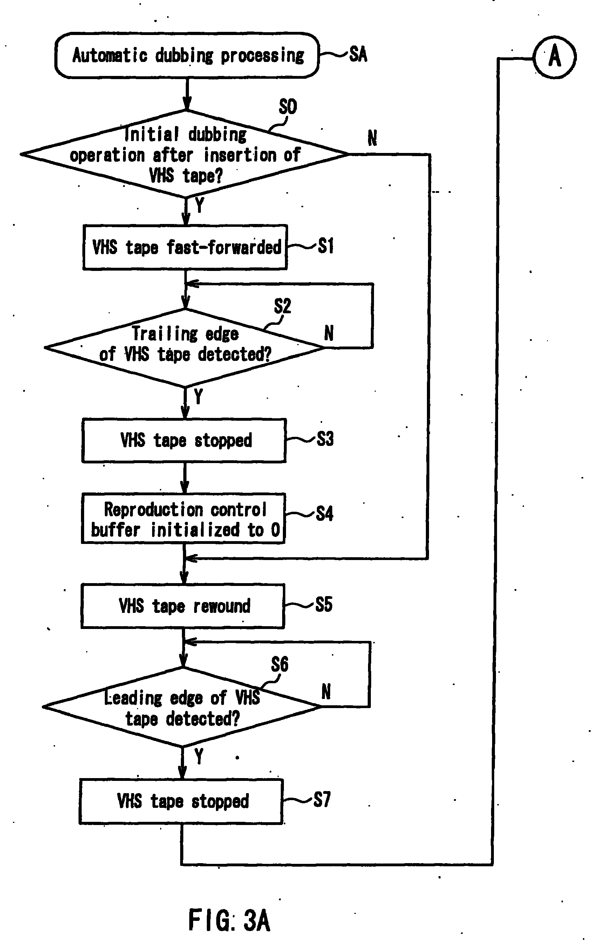

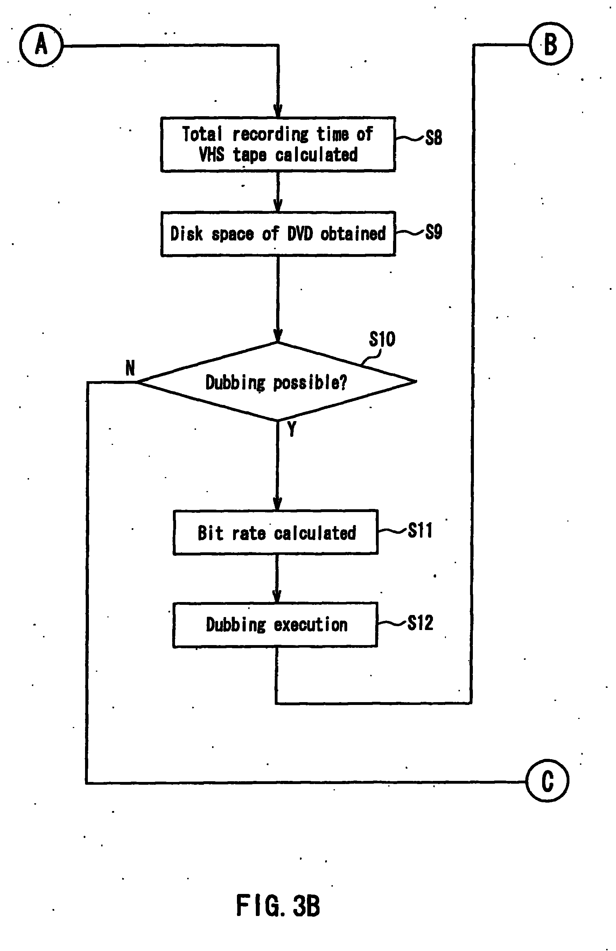

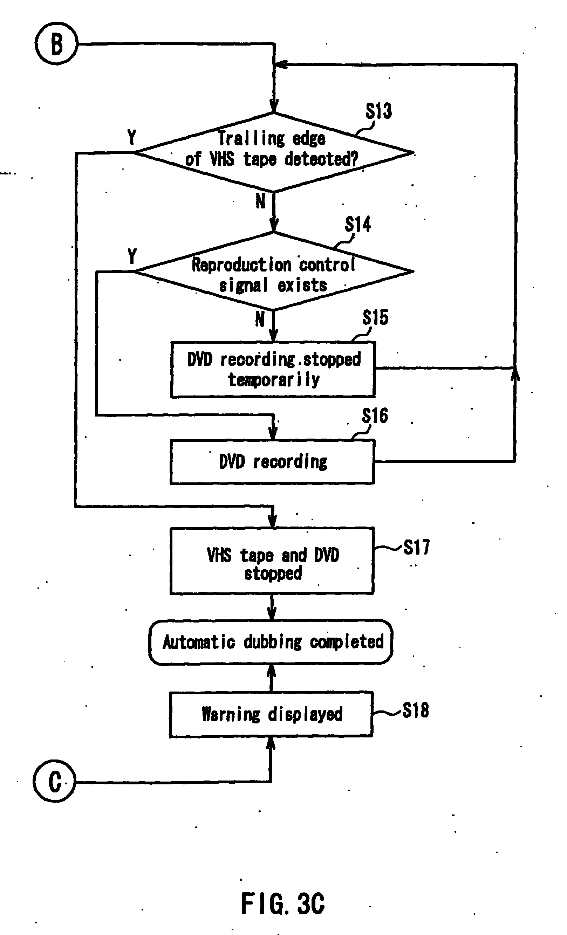

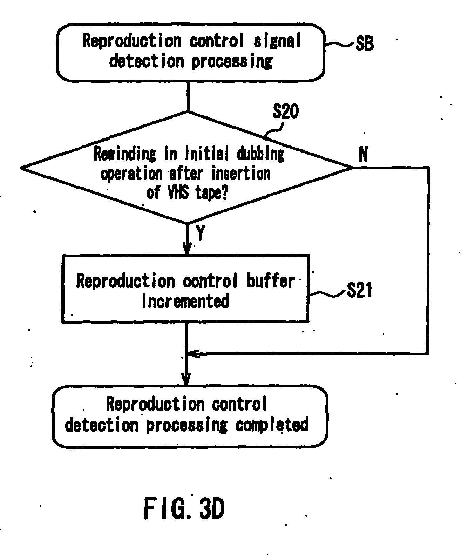

Next, a process of dubbing from the magnetic tape medium 1 to the digital recording medium 2 in the dubbing apparatus according to the present embodiment will be described with reference to a flow chart shown in FIGS. 3A to 3D. It is assumed that the magnetic tape medium in the present embodiment is a video tape, and the digital recording medium therein is a DVD.

SA denotes automatic dubbing processing performed when an instruction for performing dubbing is input. SB denotes reproduction control signal detection processing performed when a reproduction control signal is detected while a tape is traveling.

In the reproduction control signal detection processing SB, when a video tape is inserted, and a reproduction control signal is detected during rewinding in an initial dubbing operation, the processing in S21 is performed next. Otherwise, the reproduction control signal detection processing SB is completed (S20).

In S21, 1 is added to the value stored in a reproduction control buffer, whereby the reproduction control signal detection processing SB is completed. The reproduction control buffer stores the number of detected reproduction control signals and is provided in the storage part 12.

In the automatic dubbing processing SA, first, during an initial dubbing operation after insertion of a video tape, the process proceeds to S 1, and the video tape is fast-forwarded. Otherwise, the process proceeds to S5 (S0).

After the video tape is fast-forwarded in S 1, the process is placed in a standby state until a trailing edge is detected (S2). When the trailing edge is detected, the travel of the video tape is stopped (S3). The reproduction control buffer is initialized to 0 (S4).

Next, the video tape is rewound (S5), and the process is placed in a standby state until a leading edge of the video tape is detected (S6). During the rewinding, every time a reproduction control signal is detected, the reproduction control signal detection processing SB is performed. When the leading edge of the video tape is detected, the travel of the video tape is stopped (S7). The total recording time of the video tape is calculated from the value stored in the reproduction control buffer added by the reproduction control signal detection processing SB during the rewinding, and the calculated value is stored in the video tape total recording time buffer (S8). The video tape total recording time buffer also is provided in the storage part 12. At this time, in the case of the second and subsequent dubbing operations with the video tape remaining inserted, the reproduction control buffer and the value of the video tape total recording time buffer, used in the previous dubbing, are reused.

Next, the free space of the DVD is obtained (S9). In the case where the recordable time when information is recorded in the free space at a lowest bit rate is shorter than the time represented by the value of the video tape total recording time buffer, it is determined that dubbing is impossible, and the process proceeds to S18. Otherwise, it is determined that dubbing is possible, and the process proceeds to S11 (S10).

In the case where it is determined that dubbing is impossible in S 10, a warning is displayed (S18), and the automatic dubbing processing SA is completed.

Furthermore, in the case where it is determined that dubbing is possible in S10, the bit rate during recording with respect to the digital recording medium 2 is calculated so that the video and audio information corresponding to the time represented by the value of the video tape total recording time buffer is accommodated in the free space of the DVD, and the calculated value is stored in a bit rate buffer (S11). The bit rate buffer also is provided in the storage part 12. Next, reproduction of data from the video tape and recording of the reproduced data onto a DVD at a bit rate in accordance with the value of the bit rate buffer are started (S12), and the process is placed in a standby state until the video tape reaches the trailing edge (S13).

During this time, while there is a reproduction control signal in a section of the video tape from which data is being reproduced, the processing in S16 is performed. Otherwise, the processing in S 15 is performed (S14).

In S16 (in the case where there is a reproduction control signal), recording processing of a DVD is performed. In S15 (in the case where there is no reproduction control signal), DVD recording is stopped temporarily.

When the trailing edge of the video tape is detected in S13, the video tape is stopped, and the DVD is stopped (S17), whereby the automatic dubbing processing SA is completed.

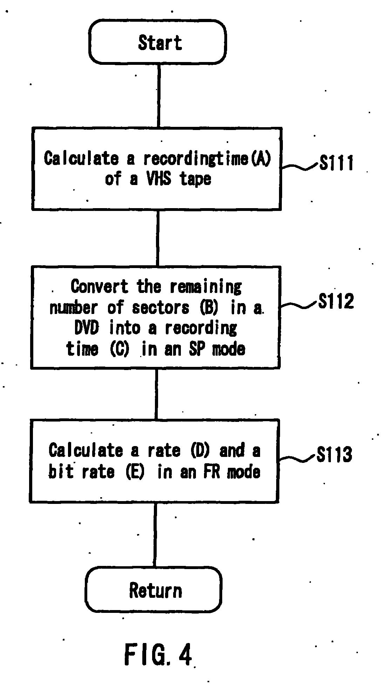

Hereinafter, the adjustment processing of a bit rate in S11 will be described with reference to FIG. 4.

The control part 15 first calculates a recording time (A) of a video tape based on the number of control signals detected by the reproduction control signal detection processing SB (S111). Herein, it is assumed that A = 3600 seconds.

Next, the control part 15 converts the DVD free space obtained in S9 into seconds (C) by which information can be recorded in an SP mode (S112). The SP mode refers to a recording mode at a bit rate at which contents of about 2 hours are just accommodated on one side of a DVD. The DVD free space (B) obtained in S9 generally is obtained from the number of vacant sectors, considering a VBR margin. Herein, for example, it is assumed that C = 1800 seconds.

Next, the control part 15 calculates a rate (D) and a bit rate (E) in an FR mode (S113). The FR mode refers to a flexible recording mode, in which information is recorded as a possible highest bit rate in accordance with a free space. The rate D is obtained by dividing the seconds C calculated from the free space by the recording time A. Next, the control part 15 obtains a bit rate E in the FR mode by multiplying the obtained rate D by a bit rate (SPb) in the SP mode. In the above example, D = C/A = 1800/3600 = 0.5, and E = D × SPb = 0.5 × SPb. Thus, in this case, information is recorded onto a DVD at a bit rate that is a half of the bit rate in the SP mode.

After S113, it may be checked whether or not the bit rate E in the FR mode obtained in S 113 falls within a range of a bit rate from the XP mode to the EP mode. In the case of a DVD, there are four-stage modes (XP mode, SP mode, LP mode, and EP mode) from the XP mode to the EP mode. The XP mode refers to a mode in which information is recorded at such a bit rate that contents of about 1 hour are accommodated on one side of a DVD. The LP mode refers to a mode in which information is recoded at such a bit rate that contents of about 4 hours are accommodated on one side of a DVD. The EP mode refers to a mode in which information is recorded at such a bit rate that contents of about 6 hours are accommodated on one side of a DVD. More specifically, the bit rate in the XP mode is highest, and the bit rate in the EP mode is lowest. Thus, in the case where the bit rate E obtained in S 113 is larger than that in the XP mode, information may be recorded onto a DVD at a bit rate in the XP mode. In the case where the bit rate E obtained in S 113 is smaller than that in the EP mode, information may be recorded onto a DVD at a bit rate in the EP mode.

As described above, in the dubbing apparatus according to the present embodiment, all the recorded parts of analog video and audio information recorded on one magnetic tape medium such as a video tape can be dubbed onto one digital recording medium such as a DVD in a shorter period of time with a user's simple operation. Furthermore, dubbing is not performed erroneously with respect to the free space of the digital recording medium such as a DVD, when the recordable time when information is recorded at a lowest bit rate is shorter than the time of video and audio information recorded on a magnetic tape medium such as a VHS. Furthermore, when the analog video and audio recording information recorded on a magnetic tape medium such as a video tape is dubbed onto a plurality of digital recording media such as a DVD, dubbing can be performed in a shorter period of time.

In the above description, the case where the analog recording medium is a video tape, and the digital recording medium is a DVD has been described mainly. However, the analog recording medium is not limited to a video tape, and the digital recording medium is not limited to a DVD.

The present invention is useful as an information recording and reproducing apparatus for dubbing video and audio information recorded on an analog recording medium onto a digital recording medium in a short period of time.

## Claims

1. An information recording and reproducing apparatus including a reproducing part for reproducing a video and audio signal from an analog recording medium, and a recording part for recording the video and audio signal onto a digital recording medium, comprising:
a control signal detecting part for detecting a control signal recorded on the analog recording medium together with the video and audio signal; and
a control part for controlling operations of the reproducing part, the recording part, and the control signal detecting part,
wherein, when a dubbing instruction is input, the control part instructs the recording part to start a dubbing operation of recording the video and audio signal reproduced by the reproducing part onto the digital recording medium, and during the dubbing operation, when the control signal detecting part detects a non-recorded region where the control signal is not recorded on the analog recording medium, the control part instructs the recording part to temporarily stop recording onto the digital recording medium.

2. The information recording and reproducing apparatus according to claim 1, wherein, during the dubbing operation, when the control signal detecting part detects the control signal again on the analog recording medium after the recording part temporarily stops recording onto the digital recording medium, the control part instructs the recording part to resume recording onto the digital recording medium.

3. The information recording and reproducing apparatus according to claim 1, further comprising a free space obtaining part for obtaining a free space of the digital recording medium,
wherein, when a dubbing instruction is input, the control part calculates a recording time of a video and audio signal of the analog recording medium, based on a control signal detected by the control signal detecting part from the analog recording medium, determines a bit rate during recording of the video and audio signal by the recording part so that all the video and audio signal corresponding to the calculated time is recorded in the free space of the digital recording medium obtained by the free space obtaining part, and starts the dubbing operation in accordance with the bit rate.

4. The information recording and reproducing apparatus according to claim 3, using a tape-shaped medium as the analog recording medium, comprising
a control head for reading a control signal from the tape-shaped medium,
wherein, when a dubbing instruction is input, the control part first-forwards the tape-shaped medium to a trailing edge, and thereafter, while the tape-shaped medium is rewound to a leading edge, the control head obtains a control signal recorded on the tape-shaped medium.

5. The information recording and reproducing apparatus according to claim 4, further comprising a storage part for storing a recording time of a video and audio signal recorded on the analog recording medium, calculated based on the control signal,
wherein the control part instructs the reproducing part and the recording part to complete the dubbing operation, when the trailing edge of the analog recording medium is detected during the dubbing operation, and
after completion of the dubbing operation, when a dubbing instruction is input again without taking the analog recording medium out of the information recording and reproducing apparatus, the control part rewinds the tape-shaped medium to the leading edge, determines a bit rate during recording of the video and audio signal by the recording part, using the recording time stored in the storage part, and starts the dubbing operation in accordance with the bit rate.

6. The information recording and reproducing apparatus according to any one of claims 1 to 5, further comprising a user interface,
wherein, in a case where a recordable time when information is recorded at a lowest bit rate in the free space of the digital recording medium is shorter than a recording time of the video and audio signal recorded on the analog recording medium, the control part performs at least one of warning display to the user interface and suspension of the dubbing operation.

## Patentansprüche

1. Informationsaufzeichnungs- und wiedergabevorrichtung mit einem Wiedergabeteil zum Wiedergeben eines Video- und Audiosignals von einem analogen Aufzeichnungsmedium und einem Autzeichnugsteil zum Aufzeichnen des video- und Audiosignals auf ein digitales Aufzeichnungsmedium, mit:
einem Steuersignaldetektionseteil zum Detektieren eines auf das analoge Aufzeichnungsmedium zusammen mit dem Video- und Audiosignal aufgezeichneten Steuersignals; und
einem Steuerteil zum Steuern von Operationen bzw. Funktionen des Wiedergabeteils, des Aufzeichnungsteils und des Steuersignaldetektionsteils,
wobei, wenn eine Dubbing-Anweisung eingegeben ist bzw. wird, das Steuerteil das Aufzeichnungsteil anweist, eine Dubbing-Funktion des Aufzeichnens bzw. zum Aufzeichnen des von dem Wiedergabeteil wiedergegebenen Video- und Audiosignals auf das Aufzeichnungsmedium einzuleiten, und wenn während der Dubbing-Funktion das Steuersignaldetektionsteil einen nicht aufgezeichneten Bereich detektiert, in dem das Steuersignal nicht auf das analoge Aufzeichnungsmedium ausgezeichnet ist, das Steuerteil das Aufzeichnungsteil anweist, temporär das Aufzeichnen auf das digitale Aufzeichnungsmedium zu stoppen.

2. informationsaufzeichnungs- und wiedergabevorrichtung nach Anspruch 1, bei der, wenn während der Dubbing-Funktion das Steuersignaldetektionsteil das Steuersignal erneut auf dem analogen Aufzeichnungsmedium detektiert, nachdem das Aufzeichnungsteil temporär das Aufzeichnen auf das digitale Aufzeichnungsmedium stoppt, das Steuerteil das Aufzeichnungsteil anweist, das Aufzeichnen auf das digitale Aufzeichnungsmedium wiederaufzunehmen.

3. Informationsaufzeichungs- und Wiedergabevorrichtung nach Anspruch 1, die ferner ein Freibereichs-Erhaltungs-bzw. -Ermittlungsteil zum Ermitteln eines freien Bereichs des digitalen Aufzeichnungsmediums aufweist,
wobei, wenn eine Dubbing-Anweisung eingegeben wird, das Steuerteil eine Aufzeichnungszeit eines Video- und Audiosignals des analogen Aufzeichnungsmediums auf Grundlage eines durch das Steuersignaldetektionsteil vom analogen Aufzeichnungsmedium detektierten Steuersignals berechnet, eine Bitrate während der Aufzeichnung des Video- und Audiosignals durch das Aufzeichnungsteil bestimmt, so dass das gesamte, der berechneten Zeit entsprechende Video- und Audiosignal in den freien Bereich des digitalen Aufzeichnungsmediums, der durch das Freibereichs-Ermittlungsteil ermittelt wurde, aufgezeichnet wird, und die Dubbing-Funktion in Entsprechung zur Bitrate einleitet.

4. Informationsaufzeichnungs- und Wiedergabevorrichtung nach Anspruch 3 , die ein bandförmiges Medium als das analoge Aufzeichnungsmedium verwendet, mit
einem Steuerkopf zum Lesen eines Steuersignals von dem bandförmigen Medium,
wobei das Steuerteil, wenn eine Dubbing-Anweisung eingegeben wird, das bandförmige Medium bis zu einer Endkante vorspult und hiernach, während das bandförmige Medium in zu einer Anfangskante zurückgespult wird, der Steuerkopf ein Steuersignal erhält, das auf das bandförmige Medium aufgezeichnet ist.

5. Informationsaufzeichnungs- und Wiedergabevorichtung nach Anspruch 4, die ferner einen Speicherteil zum Speichern einer Aufzeichnungszeit eines auf dem analogen Aufzeichungsmedium aufgezeichneten Video- und Audiosignals, berechnet auf Grundlage des Steuersignals, aufweist,
wobei das Steuerteil das Wiedergabeteil und das Aufzeichnungsteil anweist, die Dubbing-Funktion zu vervollständigen, wenn die Endkante des analogen Aufzeichnungsmediums während der Dubbing-Funktion detektiert wird, und
nach der Fertigstelllung der Dubbing-Funktion das Steuerteil das bandförmige Medium zur Anfangskante zurückpult, eine Bitrate während der Aufzeichnung des Video- und Audiosignals durch das Aufzeichnungsteil unter Verwendung der in dem Speicherteil gespeicherten Aufzeichnungszeit bestimmt, und die Dubbing-Funktion in Entsprechung zur Bitrate einleitet, wenn, ohne das analoge Aufzeichnungsmedium aus der Informationsaufzeichnungs und Wiedergabevorrichtung zu entnehmen, erneut eine Dubbing-Anweisung eingegeben wird.

6. Informationsaufzeichnungs- und Wiedergabevorrichtung nach einem der Ansprüche 1 bis 5, die ferner ein User-Interface aufweist,
wobei, für den Fall das eine aufzeichenbare Zeit geringer als eine Zeit zur Aufzeichnung für das auf dem analogen Aufzeichungsmedium ausgezeichnete Video- und Audiosignal ist, wenn Information mit einer niedrigsten Bitrate in dem freien Bereich des digitalen Aufzeichnungmediums aufgezeichnet wird, das Steuerteil wenigstens eine Warnanzeige an das User-Interface und einen Aufschub bzw. eine Unterbrechung der Dubbing-Funktion ausführt.

## Revendications

1. Appareil d'enregistrement et de reproduction d'informations, comportant un moyen de reproduction destiné à reproduire un signal vidéo et audio à partir d'un support d'enregistrement analogique, et un moyen d'enregistrement destiné à enregistrer le signal vidéo et audio sur un support d'enregistrement numérique, l'appareil, comprenant :
un moyen de détection de signal de commande destiné à détecter un signal de commande enregistré sur le support d'enregistement analogique conjointement avec le signal vidéo et audio; et
un moyen de commande destiné à commander des opérations du moyen de reproduction, du moyen d'enregistrement et du moyen de détection de signal de commande,
lors de l'entrée d'une instruction de report d'enregistrement, le moyen de commande donnant au moyen d'enregistrement l'instruction de démarrer une opération de report d'enregistrement consistant à enregistrer le signal vidéo et audio reproduit par le moyen de reproduction sur le support d'enregistrement numérique, et, au cours de l'opération de report d'enregistrement, lorsque le moyen de détection de signal de commande détecte une région non enregistrée où le signal de commande n'est pas enregistré sur le support d'enregistrement analogique, le moyen de commande donnant au moyen d'enregistrement l'instruction d'interrompre provisoirement l'enregistrement sur le support d'enregistrement numérique.

2. Appareil d'enregistrement et de reproduction d'informations selon la revendication 1, au cours de l'opération de report d'enregistrement, lorsque le moyen de détection de signal de commande détecte à nouveau le signal de commande sur le support d'enregistrement analogique après que le moyen d'enregistrement a interrompu provisoirement l'enregistrement sur le support d'enregistrement numérique, le moyen de commande donnant au moyen d'enregistrement l'instruction de reprendre l'enregistrement sur le support d'enregistrement numérique.

3. Appareil d'enregistrement et de reproduction d'informations selon la revendication 1, comprenant en outre un moyen d'obtention d'espace libre destiné à obtenir un espace libre du support d'enregistrement numérique,
lors de l'entrée d'une instruction de report d'enregistrement, le moyen de commande : calculant une durée d'enregistrement d'un signal vidéo et audio du support d'enregistrement analogique, en fonction d'un signal de commande détecté par le moyen de détection de signal de commande à partir du support d'enregistrement analogique ; déterminant un débit binaire au cours de l'enregistrement du signal vidéo et audio par le moyen d'enregistrement de façon à ce que la totalité du signal vidéo et audio correspondant la durée calculée soit enregistrée dans l'espace libre du support d'enregistrement numérique ; et démarrant l'opération de report d'enregistrement conformément au débit binaire.

4. Appareil d'enregistrement et de reproduction d'informations selon la revendication 3, utilisant un support en forme de bande comme support: d'enregistrement analogique, comprenant :
une tête de commande destinée à lire un signal de commande sur le support en forme de bande,
lors de l'entrée d'une instruction de report d'enregistrement, le moyen de commande faisant d'abord avancer le support en forme de bande jusqu'à un bord arrière puis, pendant le rembobinage du support en forme de bande jusqu'à un bord avant, la tête de commande obtenant un signal de commande enregistré sur le support en forme de bande.

5. Appareil d'enregistrement et de reproduction d'informations selon la revendication 4, comprenant en outre un moyen de mémorisation destiné à mémoriser une durée d'enregistrement d'un signal vidéo et audio enregistre sur support d'enregistrement analogique, calculée en fonction du signal de commande,
le moyen de commande donnant au moyen de reproduction et au moyen d'enregistrement l'instruction de mettre un terme à l'opération de report d'enregistrement lors de la détection du bord arrière du support d'enregistrement analogique au cours de l'opération de report d'enregistrement, et
au terme de l'opération de report d'enregistrement, lors de l'entrée d'une nouvelle instruction de report d'enregistrement sans retrait du support, d'enregistrement:, analogique de l'appareil d'enregistrement et de reproduction d'informations, le moyen de commande : rembobinant le support en forme de bande jusqu'au bord avant ; déterminant un débit binaire au cours de l'enregistrement du signal vidéo et. audio par le moyen d'enregistrement en utilisant la durée d'enregistrement mémorisée dans le moyen de mémorisation ; et démarrant l'opération de report d'enregistrement conformément au débit binaire.

6. Appareil d'enregistrement et de reproduction d'informations selon l'une quelconque des revendications 1 à 5, comprenant en outre un interface utilisateur,
dans le cas où une durée enregistrable lors de l'enregistrement d'informations à un débit binaire minimal dans l'espace libre du support d'enregistrement numérique est plus courte qu'une durée d'enregistrement du signal vidéo et audio enregistré sur le support d'enregistrement analogique, le moyen de commande provoquant l'affichage d'un avertissement sur l'interface-utilisateur et/ou suspendant l'opération de report d'enregistrement.
